# EUROPÄISCHE PATENTSCHRIFT

(11) **EP 2 861 686 B1**
(45) Veröffentlichungstag und Bekanntmachung des Hinweises auf die Patenterteilung: **29.08.2018**
(21) Anmeldenummer: 13732386.1
(22) Anmeldetag: 12.06.2013
(51) Int. Cl.: C09J 123/22, C09J 109/00, C08K 5/09, C08L 21/00, C08K 3/00, C08K 5/00, C08K 5/103, C08L 9/00, C08L 9/06, C08L 13/00

(54) **HEIßHÄRTENDE REAKTIVSYSTEME**
HEAT-CURING REACTIVE SYSTEMS
SYSTÈMES RÉACTIFS DURCISSANT À CHAUD

(30) Priorität: 13.06.2012 DE 102012209923
(43) Veröffentlichungstag der Anmeldung: 22.04.2015
(73) Patentinhaber: Henkel AG & Co. KGaA, 40589 Düsseldorf (DE)
(72) Erfinder: SAUER, Ralf, 68789 St. Leon-Rot (DE); BORN, Peter, 69207 Sandhausen (DE); MÜLLER, Mathias, 67256 Weisenheim a.S. (DE)
(86) Internationale Anmeldenummer: PCT/EP2013/062127
(87) Internationale Veröffentlichungsnummer: WO 2013/186251

(56) Entgegenhaltungen:
- EP-A1- 1 544 243
- EP-A2- 0 363 302
- WO-A1-2010/142563
- US-A1- 2004 127 617

## Beschreibung

Die vorliegende Anmeldung betrifft heiß-härtende Zubereitungen auf Basis einer Triglyceridfraktion, enthaltend Q-3-Fettsäuren und/oder Q-6-Fettsäuren, ein Verfahren zur Herstellung dieser Zubereitungen sowie die Verwendung dieser Zubereitungen als akustisch dämpfender Klebstoff, Dichtstoff oder Beschichtungsmasse.

Bei der Herstellung von Fahrzeugen, Maschinen und Geräten werden zur Gewichtsreduzierung häufig sehr dünnwandige Bleche eingesetzt. Mechanisch sich bewegende Teile oder laufende Motoren versetzen diese dünnwandigen Bleche unvermeidbar in Schwingungen, deren Frequenzen vielfach im Hörbereich des menschlichen Ohres liegen. Diese Schwingungen werden in Form von Körperschall über das gesamte Fahrzeug beziehungsweise die Maschine oder das Gerät weitergeleitet und können an entfernten Stellen in die Luft als störender Schall abgestrahlt werden. Zur Reduzierung der Schallabstrahlung und zur Körperschalldämpfung werden die eingesetzten dünnwandigen Bleche daher insbesondere im Automobilbau und bei der Herstellung von Haushaltsgeräten mit schalldämpfenden Belägen, so genannten Antidröhnbeschichtungen, versehen.

Nach herkömmlicher Verfahrensweise werden dabei Mischungen aus Füllstoffen mit hohem spezifischen Gewicht und Bitumen zu Folien extrudiert, aus denen dann individuell geformte Formteile gestanzt oder geschnitten werden. Anschließend werden diese Formteile auf die betreffenden Blechteile geklebt oder auf diesen magnetisch fixiert, wobei sie gegebenenfalls noch durch Erwärmung an die Form des Bleches angepasst werden. Obwohl diese Bitumen-Folien teilweise sehr spröde sind und insbesondere bei tiefen Temperaturen gelegentlich zum Abplatzen vom Blech neigen, finden sie aufgrund ihres geringen Materialpreises noch häufig Anwendung. Auch die vielfach vorgeschlagenen Zusätze von Elastomeren ergeben nur eine geringfügige Verbesserung dieser Problematik, die für viele Anwendungen unzureichend ist. Des Weiteren ist das Aufbringen der vorgeformten Bitumenteile auf kompliziert geformte oder schwer zugängliche Blechteile von Maschinen oder Fahrzeugen, beispielsweise die Innenflächen der Hohlräume von Kraftfahrzeugtüren, nur schwer und teilweise sogar überhaupt nicht möglich. Als weiterer Nachteil kommt hinzu, dass für ein einziges Fahrzeug oder Gerät in vielen Fällen mehrere Stanzteile benötigt werden, wodurch eine aufwendige Lagerhaltung im Bereich der Fahrzeugfertigung erforderlich ist. Ein weiterer Nachteil der Bitumenformteile ist ihr hohes Gewicht. Ferner besteht das Risiko, dass magnetisch fixierte Formteile verrutschen und dann nicht mehr im zu dämpfenden Bereich des Blechteils liegen.

Man hat daher versucht, andere Polymersysteme als Alternative zu entwickeln, die die Nachteile der Bitumenfolien nicht aufweisen. So wurden beispielsweise Füllstoffe enthaltende wässrige Polymerdispersionen von Polyvinylacetat oder Ethylen-Vinylacetat-Copolymeren entwickelt, die auf die Blechteile in der notwendigen Belagdicke aufgespritzt werden können. Diese Systeme sind jedoch insbesondere für die industrielle Verwendung mit hohen Fertigungsstückzahlen nachteilig, da bei größeren Belagdicken das Wasser nicht schnell genug aus der aufgespritzten Schicht entfernt werden kann. Ein weiterer Nachteil dieser konventionellen Methoden der Schalldämpfung besteht darin, dass diese Materialien nur dem einzigen Zweck der Schalldämpfung dienen.

In dem Bestreben, die Komplexität von Fahrzeugen, Maschinen und Geräten zu reduzieren und damit die Herstellkosten zu senken, besteht insbesondere in der Fahrzeugindustrie der Wunsch, schalldämpfende Materialien bereitzustellen, die möglichst im Rohbau der Fahrzeug-Herstellung oder in der Lacklinie automatisch mit Hilfe von Robotern gezielt appliziert werden können.

So werden beispielsweise in der WO-A1-96/16136 sowie der WO-A1-2006/076958 einkomponentige, heiß-härtende, reaktive Zusammensetzungen auf der Basis von Flüssigkautschuken mit reaktiven olefinischen Doppelbindungen sowie gegebenenfalls zugesetzten Kautschuken und Vulkanisationssystemen auf der Basis von Schwefel vorgeschlagen. Diese Zusammensetzungen haben im vulkanisierten Zustand hohe Maxima des akustischen Verlustfaktors im Gebrauchstemperaturbereich zwischen etwa +10°C und +40°C.

Obwohl diese Zubereitungen, die technischen Anforderungen in einem hohen Maße erfüllen, ist in jüngster Zeit stetig das Bedürfnis gewachsen, auch derartige Kleb- und Dichtstoffe auf Basis von natürlichen und/oder nachwachsenden Rohstoffen zu formulieren.

Dementsprechend war es die Aufgabe der vorliegenden Erfindung, heiß-härtbare Zubereitungen zu entwickeln, die hinsichtlich ihrer Applizierbarkeit und ihren mechanischen Eigenschaften mit den Zusammensetzungen auf Basis von Flüssigkautschuken vergleichbar sind, aber einen höheren Anteil an natürlichen und/oder nachwachsenden Rohstoffen aufweisen.

Überraschenderweise wurde nunmehr gefunden, dass sich heiß-härtbare Zubereitungen auf Basis von Triglyceridfraktionen mit einem Gehalt an Q-3-Fettsäuren und/oder Q-6-Fettsäuren durch eine gute Applizierbarkeit und hervorragende mechanische Eigenschaften im ausgehärteten Zustand auszeichnen. Bei der Heißvernetzung entstehen aus den erfindungsgemäßen Systemen kautschukartige klebfreie Elastomerstrukturen, deren Festigkeit (Kohäsionsfestigkeitt, gemessen als Zugfestigkeit des vernetzten Films nach DIN 53504) variabel im Bereich von 0,2 MPa - 6 MPa einstellbar ist. Im Gegensatz zu klassischen Synthesekautschuk-basierten Systemen führt die Verwendung der erfindungsgemäßen Triglyceridfraktionen darüber hinaus zu breiteren Spritzfächern bei gleichen und fallweise sogar niedrigeren Verarbeitungsdrücken.

Ein erster Gegenstand der vorliegenden Erfindung sind dementsprechend heiß-härtende Zubereitungen, die
(a) eine Triglyceridfraktion, deren Fettsäurenverteilung einen Anteil von mindestens 5Gew.-%, insbesondere von mindestens 60Gew.-%, einer oder mehrerer Ω-3-Fettsäure(n) und/oder einer oder mehrerer Ω-6-Fettsäure(n) aufweist,
(b) mindestens ein Vulkanisationsmittel ausgewählt aus der Gruppe, bestehend aus
   (b1) Schwefel,
   (b2) peroxidischen Vulkanisationsmitteln,
   (b3) Chinonen und/oder Chinondioximen und/oder
   (b4) Dinitrosobenzolen,
(c) mindestens einen anorganischen Füllstoff und
(d) mindestens ein synthetisches Polymer, das mindestens eine C=C-Doppelbindung und/oder mindestens eine CΞC-Dreifachbindung aufweist,
wobei die Triglyceridfraktion eine Fettsäurenverteilung mit einem Anteil von mindestens 15Gew.- %, einer oder mehrerer Ω-3-Fettsäure(n) aufweist und die Triglyceridfraktion (a) in der heiß-härtbaren Zubereitung in einer Menge von 10 bis 50 Gew.-% bezogen auf die gesamte Zubereitung enthalten ist. Als erste erfindungsgemäße Komponente enthalten die erfindungsgemäßen heiß-härtbaren Zubereitungen mindestens eine Triglyceridfraktion, deren Fettsäurenverteilung einen Anteil von mindestens 5Gew.-%, insbesondere von mindestens 10Gew.-%, ganz besonders bevorzugt von mindestens 60Gew.-%, einer oder mehrerer Ω-3-Fettsäure(n) und/oder einer oder mehrerer Ω-6-Fettsäure(n) aufweist.

Unter einer "Triglyceridfraktion" wird erfindungsgemäß die Summe aller in der Zubereitung enthaltenen Triglyceride, das heißt der Dreifachester des Glycerins mit drei Fettsäuremolekülen, verstanden. Dabei spielt es zur Bestimmung der Triglyceridfraktion keine Rolle, aus welchem eingesetzten Rohstoff die Triglyceride stammen.

Die Fettsäurenverteilung einer Triglyceridfraktion gibt erfindungsgemäß die Masseanteile der unterschiedlichen Fettsäuren bezogen auf die Gesamtmasse der Fettsäuren in der Triglyceridfraktion an; die unterschiedlichen Anteile werden dabei üblicherweise nach Freisetzung der Fettsäuren als Methylester gaschromatographisch bestimmt. Die Masse des Glycerins geht dementsprechend in diese Berechnung nicht mit ein.

Erfindungsgemäß bevorzugte Ω-3-Fettsäuren sind:
- Hexadecatriensäure (16:3; (ω-3)),
- Alpha-Linolensäure (18:3 (ω-3)),
- Stearidonsäure (18:4; (ω-3)),
- Eicosatriensäure (20:3; (ω-3)),
- Eicosatetraensäure (20:4; (ω-3)),
- Eicosapentaensäure (20:5; (ω-3)),
- Heneicosapentaensäure (21:5; (ω-3)),
- Docosapentaensäure (22:5; (ω-3)),
- Docosahexaensäure (22:6; (ω-3)),
- Tetracosapentaensäure (24:5; (ω-3)) und
- Tetracosahexaensäure (24:6; (ω-3)).

Erfindungsgemäß besonders bevorzugte Ω-3-Fettsäuren sind
- Alpha-Linolensäure (18:3 (ω-3)) und
- Eicosapentaensäure (20:5; (ω-3)).
Die Alpha-Linolensäure (18:3 (ω-3)) ist erfindungsgemäß eine ganz besonders bevorzugte Ω-3-Fettsäure.

Erfindungsgemäß bevorzugte Ω-6-Fettsäuren sind:
- Linolsäure (18:2; (ω-6)),
- Gamma-Linolensäure (18:3; (ω-6)),
- Calendulasäure (18:3; (ω-6)),
- Eicosadiensäure (20:2; (ω-6)),
- Dihomogammalinolensäure (20:3; (ω-6)),
- Arachidonsäure (20:4; (ω-6)),
- Docosadiensäure (22:2; (ω-6)),
- Docosatetraensäure (22:4; (ω-6)),
- Docosapentaensäure (22:5; (ω-6)),
- Tetracosatetraensäure (24:4; (ω-6)) und
- Tetracosapentaensäure (24:5; (ω-6)).

Erfindungsgemäß besonders bevorzugte Ω-6-Fettsäuren sind
- Linolsäure (18:2; (ω-6)),
- Gamma-Linolensäure (18:3; (ω-6)) und
- Arachidonsäure (20:4; (ω-6)),
Die Linolsäure (18:2 (ω-6)) ist erfindungsgemäß eine ganz besonders bevorzugte Ω-6-Fettsäure.

Besonders gute mechanische Eigenschaften konnten erhalten werden, wenn die Triglyceridfraktion eine Fettsäurenverteilung mit einem Anteil von mindestens 4Gew.-%, insbesondere mindestens 15Gew.-%, einer oder mehrerer Ω-3-Fettsäure(n) aufweist.

Es hat sich als erfindungsgemäß vorteilhaft erwiesen, wenn mindestens 40Gew.-%, insbesondere 60Gew.-%, ganz besonders 100Gew.-% der Triglyceridfraktion bei 25°C flüssig ist, das heißt in Form eines Öles vorliegt.

Weiterhin hat es sich als vorteilhaft erwiesen, wenn die Triglyceridfraktion mit den erfindungsgemäßen Anteilen an Ω-3-Fettsäuren und/oder Ω-6-Fettsäuren aus einer natürlichen Quelle, beispielsweise entsprechenden pflanzlichen und/oder tierischen Ölen stammen. Obwohl pflanzliche Öle dabei erfindungsgemäß besonders bevorzugt sind, ist auch ein Einsatz von tierischen Ölen, wie beispielsweise Fischöl oder Lebertranöl erfindungsgemäß mit umfasst.

Erfindungsgemäße Triglyceridfraktionen sind beispielsweise in Sonnenblumenöl, Rapsöl, Sojaöl, Tallöl, Leindotteröl, Tungöl, Leinöl und/oder Hanföl enthalten. Rapsöl, Sojaöl, Tallöl, Leindotteröl, Tungöl, Leinöl und/oder Hanföl sind erfindungsgemäß bevorzugt; Tallöl, Leindotteröl, Tungöl, Leinöl und/oder Hanföl sind erfindungsgemäß besonders bevorzugt; Tungöl, Leinöl und Hanföl sind erfindungsgemäß insbesondere bevorzugt. Der Einsatz von Leinöl ist ganz besonders bevorzugt. Auch der Einsatz einer Kombination aus zwei, drei oder mehreren geeigneten Ölen, wie beispielsweise
- Sonnenblumenöl und Rapsöl
- Sonnenblumenöl und Sojaöl
- Sonnenblumenöl und Tallöl,
- Sonnenblumenöl und Leindotteröl
- Sonnenblumenöl und Tungöl,
- Sonnenblumenöl und Leinöl,
- Sonnenblumenöl und Hanföl,
- Rapsöl und Sojaöl,
- Rapsöl und Tallöl,
- Rapsöl und Leindotteröl,
- Rapsöl und Tungöl,
- Rapsöl und Leinöl,
- Rapsöl und Hanföl,
- Sojaöl und Tallöl,
- Sojaöl und Leindotteröl,
- Sojaöl und Tungöl,
- Sojaöl und Leinöl,
- Sojaöl und Hanföl,
- Tallöl und Leindotteröl,
- Tallöl und Tungöl,
- Tallöl und Leinöl,
- Tallöl und Hanföl,
- Leindotteröl und Tungöl,
- Leindotteröl und Leinöl,
- Leindotteröl und Hanföl,
- Tungöl und Leinöl,
- Tungöl und Hanföl oder
- Leinöl und Hanföl
ist erfindungsgemäß bevorzugt.

Die Triglyceridfraktion (a) beziehungsweise das die Triglyceridfraktion enthaltende Öl, ist in den erfindungsgemäßen heiß-härtbaren Zubereitungen in einer Menge von 10 bis 50Gew.-% bezogen auf die gesamte Zubereitung enthalten.

Als zweiten erfindungswesentlichen Bestandteil enthalten die erfindungsgemäßen Heiß-härtbaren Zubereitungen mindestens ein speziell ausgewähltes Vulkanisationssystem ausgewählt aus der Gruppe, bestehend aus:
(b1) Schwefel,
(b2) peroxidischen Vulkanisationssystemen,
(b3) Chinonen und/oder Chinondioximen und/oder
(b4) Dinitrosobenzolen und

In einer ersten bevorzugten Ausführungsform wird als Vulkanisationsmittel synthetischer oder natürlicher Schwefel eingesetzt. Vorzugsweise wird erfindungsgemäß pulverförmiger Schwefel verwendet; es kann aber auch zur Vermeidung von Staubbelastung in der Produktion bevorzugt sein, Schwefel in Abmischung mit einem Staub-bindenden Mittel, beispielsweise vermischt mit Mineralöl, Paraffinöl oder Siliziumdioxid einzusetzen. Dabei kann der Gehalt der Staub-bindenden Öle durchaus so gewählt sein, dass eine Schwefel-haltige Paste als Rohstoff zum Einsatz kommt. Bevorzugt wird Schwefel in der S₈-Konfiguration verwendet.

Der Aktivsubstanzgehalt an Schwefel in den erfindungsgemäßen Zubereitungen kann dabei in weiten Grenzen variieren, er kann bis zu 20 Gew.-%, vorzugsweise bis etwa 15 Gew.-%, insbesondere bis zu 10Gew.-%, jeweils bezogen auf die gesamte heiß-härtbare Zubereitung, betragen; die Untergrenze sollte vorzugsweise nicht unter 0,5 Gew.-% liegen. Dabei hängt der Gehalt an Schwefel von der Reaktivität der eingesetzten Flüssigkautschuke sowie gegebenenfalls dem Einsatz von Polymerisationsadditiven ab. Außerdem lässt sich über den Schwefelgehalt das Maximum des Verlustfaktors sowie der nutzbare Temperaturbereich eines ausreichend hohen Verlustfaktors beeinflussen.

In einer zweiten bevorzugten Ausführungsform werden radikalische Vulkanisationsmittel, auf der Basis von organischen oder anorganischen Peroxiden, eingesetzt. Beispiele für erfindungsgemäß bevorzugte Peroxide sind Diacetylperoxid, Di-tert.butylperoxid, Dicumylperoxid sowie Dibenzoylperoxid. Die Peroxide sind als Vulkanisationsmittel in den erfindungsgemäßen Zubereitungen in Mengen von 0,2 Gew.-% bis 3 Gew.-% enthalten.

In einer dritten bevorzugten Ausführungsform werden Chinone und/oder Chinondioxime als Vulkanisationsmittel eingesetzt. Ein besonders bevorzugter Vertreter dieser Gruppe ist das p-Benzochinondioxim. Die Chinone und/oder Chinondioxime werden in den erfindungsgemäßen Zubereitungen vorzugsweise in Konzentrationen von 0,2 Gew.-% bis 5 Gew.-% eingesetzt. Diese Chinon-basierten Vulkanisationsmittel werden bevorzugt phlegmatisiert in Pastenform, beispielsweise in Abmischung wie Mineralölen, verwendet, wobei der Aktivsubstanzgehalt üblicherweise von 40 Gew.-% und 70 Gew.-% beträgt.

Schwefel ist ein ganz besonders bevorzugtes Vulkanisationsmittel (b).

In einer vierten bevorzugten Ausführungsform werde Dinitrosobenzole, insbesondere das 1,4-Dinitrosobenzol, als Vulkanisationsmittel verwendet. Diese Stoffgruppe wird vorzugsweise in den erfindungsgemäßen Zubereitungen in einer Konzentration von 0,2 Gew.-% bis 5 Gew.-%, jeweils bezogen auf die gesamte heiß-härtbare Zubereitung, eingesetzt.

Dabei hat es sich unabhängig von der speziellen Ausführungsform als besonders vorteilhaft erwiesen, wenn das Vulkanisationsmittel in Kombination mit
- organischen Härtungsbeschleuniger, wie beispielsweise Mercaptobenzothiazol, Dithiocarbamaten, Sulfenamiden, Disulfiden wie beispielsweise Dibenzothiazoldisulfid und/oder Thiuramdisulfiden, Aldehyd-Amin-Beschleunigern, Guanidinen, und/oder
- Metalloxiden, wie beispielsweise Zinkoxid,
eingesetzt wird. Zusätzlich können typische Kautschukvulkanisationshilfsmittel wie beispielsweise Fettsäuren (beispielsweise Stearinsäure) in der Formulierung vorhanden sein.

Der Gehalt an organischem Härtungsbeschleuniger kann vorzugsweise zwischen 0 und etwa 10 Gew.-% variieren. Auch der Gehalt an Metalloxiden liegt vorzugsweise im Bereich zwischen 0 und 10 Gew.-%.

Als dritte erfindungswesentliche Komponente enthalten die erfindungsgemäßen Zubereitungen mindestens einen anorganischen Füllstoff.

Als erste Gruppe anorganischer Füllstoffe kommen beispielsweise die diversen gemahlenen oder gefällten Kreiden, Calcium-Magnesiumcarbonate, Calciumoxid, Schwerspat sowie insbesondere silikatische Füllstoffe vom Typ des Aluminium-Magnesium-Calcium-Silicats, beispielsweise Wollastonit oder Chlorit, oder Alumunium-Borosilikatgläser in Frage. Kreiden sind erfindungsgemäß bevorzugte anorganische Füllstoffe; ganz besonders bevorzugt sind gemahlene mineralische Kreiden. Weiterhin ist Calciumoxid ein besonders bevorzugter anorganischer Füllstoff im Sinne der vorliegenden Erfindung. Der Gehalt an Calciumcarbonat und/oder Calciumoxid kann vorzugsweise zwischen 5 Gew.-% bis etwa 50 Gew.-% bezogen auf die gesamte heiß-härtende Zubereitung variieren. Bei Calciumoxid sind Konzentrationen von 0 und etwa 10 Gew.-% bezogen auf die gesamte heiß-härtende Zubereitung üblich.

Es kann unter Umständen zweckmäßig sein, dass zumindest ein Teil der anorganischen Füllstoffe Oberflächen-vorbehandelt ist; insbesondere hat sich bei den verschiedenen Calciumcarbonaten und Kreiden eine Beschichtung mit mindestens einer Fettsäure, insbesondere mit Stearinsäure, als zweckmäßig erwiesen.

Eine zweite Gruppe anorganischer Füllstoffe, die in den erfindungsgemäßen heiß-härtenden Zubereitungen eingesetzt werden können, sind die blättchenförmigen Füllstoffe.
Besonders bevorzugt sind heiß-härtende Zubereitungen, die mindestens einen blättchenförmigen Füllstoff, wie beispielsweise Graphit, Vermiculit, Glimmer, Talk oder ähnliche Schichtsilikate enthalten. Graphit ist ein besonders bevorzugter blättchenförmiger Füllstoff im Sinne der vorliegenden Erfindung. Die blättchenförmigen Füllstoffe werden vorzugsweise eingesetzt, wenn ein positiver Einfluss auf die akustischen Eigenschaften gewünscht ist.
Der Gehalt an blättchenförmigen Füllstoffen kann vorzugsweise zwischen 5 Gew.-% bis zu 30 Gew.-% betragen.

Eine dritte Gruppe erfindungsgemäß bevorzugter anorganischer Füllstoffe sind die Rheologieadditive, die einen Einfluß auf die Rheologie und/oder Festigkeit der Zubereitungen haben können. Erfindungsgemäß werden die Rheologieadditive vorzugsweise ausgewählt aus Siliziumdioxid und/oder Ruß.

Der Begriff "Siliziumdioxid" umfasst erfindungsgemäß auch die als "Kieselsäure" oder angelsächsisch als "silica" bezeichneten Oxidformen des Siliciums.

Es kann erfindungsgemäß bevorzugt sein, wenn die Zubereitungen mindestens ein oberflächenmodifiziertes Siliziumdioxid enthalten; besonders vorteilhafte Eigenschaften als oberflächenmodifiziertes Siliziumdioxid weisen hydrophil modifizierte Siliziumdioxide auf.

Besonders bevorzugt sind erfindungsgemäß oberflächenmodifizierte Siliziumdioxidtypen mit einer spezifischen Oberfläche von mindestens 100m²/g, insbesondere von mindestens 150m²/g (jeweils gemessen nach der BET-Methode).

Unter Ruß wird erfindungsgemäß vorzugsweise industriell hergestellter Ruß verstanden, der im Englischen auch als "Carbon Black" bezeichnet wird.

Ein Gehalt von 0 bis 5Gew.-%, insbesondere 0,1 bis 4Gew.-%, ganz besonders 0,5 bis 3Gew.-% eines Rheologieadditives, vorzugsweise ausgewählt aus Siliziumdioxid und/oder Ruß, bezogen auf die gesamte heiß-härtbare Zubereitung ist besonders bevorzugt.

Es ist erfindungsgemäß bevorzugt, wenn die heiß-härtenden Zubereitungen eine Kombination aus zwei oder mehr anorganischen Füllstoffen enthält. Insbesondere eine Kombination aus
- mindestens einem anorganischen Füllstoff ausgewählt aus Calciumcarbonat und/oder Calciumoxid und
- mindestens einem blättchenförmigen anorganischen Füllstoff und/oder mindestens einem Rheologieadditiv
ist erfindungsgemäß besonders bevorzugt.

Eine Kombination aus
- mindestens einem anorganischen Füllstoff ausgewählt aus Calciumcarbonat und/oder Calciumoxid,
- mindestens einem blättchenförmigen anorganischen Füllstoff und
- mindestens einem Rheologieadditiv
ist erfindungsgemäß besonders ganz bevorzugt.

Es hat sich als erfindungsgemäß als besonders vorteilhaft erwiesen, wenn die heiß-härtenden Zubereitungen Graphit, Kreide und hydrophil oberflächenmodifiziertes Siliziumdioxid enthalten.

Eine erfindungsgemäß ganz besonders bevorzugte Füllstoffkombination ist die Kombination: Calciumoxid, Calciumcarbonat, Graphit und hydrophile Kieselsäure.

Die anorganischen Füllstoffe werden vorzugsweise in einer Menge von 1 bis 40Gew.-%, insbesondere von 10 bis 35Gew.-%, jeweils bezogen auf die Masse der gesamten heiß-härtbaren Zubereitung eingesetzt.

Zusätzlich zu den vorgenannten "normalen" anorganischen Füllstoffen können die erfindungsgemäßen Zusammensetzungen so genannte Leichtfüllstoffe enthalten. Unter einem Leichtfüllstoff wird erfindungsgemäß ein Füllstoff verstanden, der eine niedrigere Dichte als die restliche Zubereitung aufweist. Durch die Zugabe derartiger Leichtfüllstoffe wird dementsprechend die Gesamtdichte der Zubereitung verringert. Leichtfüllstoffe werden vorzugsweise ausgewählt aus der Gruppe der Glashohlkugeln, Flugasche (Fillite), Kunststoffhohlkugeln, beispielsweise auf der Basis von Phenolharzen, Epoxidharzen oder Polyestern, keramischen Hohlkugeln oder organischen Leichtfüllstoffen natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt sind dabei Leichtfüllstoffe auf der Basis von Mikrohohlkugeln, dies können die vorgenannten Glashohlkugeln oder aber auch die expandierbaren oder expandierten Kunststoffmikrohohlkugeln auf der Basis von Polyvinylidenchlorid-Copolymeren oder Acrylnitril-Copolymeren sein, letztere sind unter den Namen "Dualite" beziehungsweise "Expancel" von den Firmen Pierce & Stevens beziehungsweise Akzo Nobel im Handel erhältlich.

Es kann erfindungsgemäß besonders bevorzugt sein, wenn die heiß-härtbaren Zubereitungen mindestens zwei verschiedenen Leichtfüllstoffe enthalten. Eine Kombination aus Glashohlkugeln und Kunststoffhohlkugeln hat sich erfindungsgemäß als besonders vorteilhaft erwiesen, da erfindungsgemäße Zubereitungen, die diese Kombination enthalten, ein verbessertes Kompressionsverhalten unter Verarbeitungsdrücken aufweisen.

Leichtfüllstoffe sind in den heiß-härtbaren Zubereitungen vorzugsweise in einer Menge von 0,1 bis 15 Gew.-%, insbesondere von 0,4 bis 7Gew.-%, bezogen auf die gesamte heiß-härtbare Zubereitung enthalten.

Der Gesamtanteil an Füllstoffen in der heiß-härtenden Formulierung kann zwischen 10 und 70 Gew.-% variieren, der Vorzugsbereich liegt zwischen 25 und 60 Gew.-%.

Neben den verschiedenen anorganischen Füllstoffen und den Leichtfüllstoffen können die erfindungsgemäßen heiß-härtbaren Zubereitungen weiterhin Fasern enthalten. Erfindungsgemäß bevorzugte Fasern werden ausgewählt aus Kohlefasern, Aramidfasern, Glasfasern, Siliciumnitridfasern, Metallfasern, Keramikfasern, Borfasern, Basaltfasern, Polyethylenfasern, Polypropylenfasern, Polyesterfasern und/oder Naturfasern, wobei als Naturfasern Flachs- und Sisalfasern besonders bevorzugt sind.

Die Fasern sind in den heiß-härtenden Zubereitungen vorzugsweise in einer Menge von 0 bis 6Gew.-%, insbesondere von 0,5 bis 5Gew.-%, jeweils bezogen auf die gesamte Zubereitung, enthalten.

Weiterhin hat es sich als vorteilhaft erwiesen, wenn die heiß-härtbaren Zubereitungen zusätzlich zu der ungesättigten Triglyceridfraktion weiterhin mindestens ein synthetisches Polymer enthalten, das mindestens eine C=C-Doppelbindung und/oder mindestens eine CΞC-Dreifachbindung aufweist. Diese Polymere sind vorzugsweise aus der folgenden Gruppe der Homo- und/oder Copolymeren ausgewählt:
- Polybutadiene, insbesondere die 1,4- und 1,2-Polybutadiene,
- Polybutene,
- Polyisobutylene,
- 1,4-Polyisoprene,
- Styrol-Butadien-Copolymere und
- Butadienacrylnitril-Copolymere,
wobei diese Polymeren endständige und/oder (statistisch verteilte) seitenständige funktionelle Gruppen haben können. Beispiele für derartige funktionelle Gruppen sind Hydroxy-, Carboxyl-, Carbonsäureanhydrid- oder Epoxygruppen.

Anhand des mittleren Molekulargewichts (Zahlenmittel) dieser synthetischen ungesättigten Polymere unterscheidet man in der Regel zweierlei Typen: die Flüssigkautschuke und die Festkautschuke. Das mittlere Molekulargewicht der Flüssigkautschuke ist typischerweise unterhalb von 25.000g/mol, vorzugsweise zwischen 900 und 10.000g/mol. Der Anteil an synthetischen ungesättigten Polymeren variiert normalerweise zwischen 0 und 15 Gew.-%, insbesondere von 0 bis 10Gew.-% der Gesamtformulierung.

Geeignete Festkautschuke haben üblicherweise ein signifikant höheres Molekulargewicht als die Flüssigkautschuke (100.000g/mol oder höher). Beispiele für geeignete Festkautschuke sind Polybutadien, vorzugsweise mit einem sehr hohen Anteil an 1,4-cis-Doppelbindungen (typischerweise über 95Gew.-%), Styrolbutadienkautschuk, Butadienacrylnitrilkautschuk, synthetischer oder natürlicher Isoprenkautschuk, Butylkautschuk oder Polyurethankautschuk.

In einer weiteren Ausführungsform ist es bevorzugt, wenn die erfindungsgemäßen heiß-härtbaren Zusammensetzungen weiterhin mindestens ein Antioxidans enthalten.

Obwohl prinzipiell die herkömmlichen synthetischen Antioxidantien, wie beispielsweise sterische gehinderte Phenole oder Aminderivate, erfindungsgemäß geeignet sind, hat es sich als besonders vorteilhaft im Sinne der Erfindung erwiesen, wenn ein natürliches Antioxidans verwendet wird.

Beispiele für erfindungsgemäß bevorzugte synthetische Antioxidantien sind die unter der Handelsbezeichnung Wingstay® im Handel erhältlichen Produkte sowie das 2,2 Methylen-bis-(4 Methyl-6-tert.-Butylphenol) und das 2,6-Ditert.butyl-p-kresol (3,5-Di-tert-butyl-4-hydroxytoluol)

Erfindungsgemäß wird unter einem natürlichen Antioxidans eine Verbindung verstanden, die aus natürlich nachwachsenden Rohstoffen gewonnen werden kann. Es ist besonders bevorzugt, wenn Verbindungen als natürliche Antioxidantien eingesetzt werden, die unmittelbar, dass heißt ohne chemische Modifikation, aus natürlichen Rohstoffen hervorgehen. Erfindungsgemäß bevorzugte Beispiele für diese Stoffgruppe sind Tocopherol, Squalen und Sesamolin. Tocopherol ist erfindungsgemäß ganz besonders bevorzugt.

Die Antioxidantien, insbesondere die natürlichen Antioxidantien, werden in den erfindungsgemäßen heiß-härtenden Zubereitungen vorzugsweise in Mengen von 0,1 bis 5 Gew.-%, insbesondere von 0,2 bis 3 Gew.-%, jeweils bezogen auf die gesamte heiß-härtende Zubereitung, eingesetzt.

Weiterhin können die erfindungsgemäßen heiß-härtenden Zubereitungen die für diese Art der Zubereitung typischen Bestandteile enthalten.

So können beispielsweise als Klebrigmacher und/oder Haftvermittler Kohlenwasserstoffharze, Phenolharze, Terpen-Phenolharze, Resorcinharze oder deren Derivate, modifizierte oder unmodifizierte Harzsäuren beziehungsweise -ester (Abietinsäurederivate), Polyamine, Polyaminoamide, Polyepoxydharze, Anhydride und Anhydrid-gruppen enthaltende Copolymere eingesetzt werden. Art und Menge der Klebrigmacher beziehungsweise der Haftvermittler hängt von der Polymerzusammensetzung des Kleb-/ Dichtstoffes sowie der Beschichtungszusammensetzung ab, von der Festigkeit der gehärteten Zusammensetzung und von dem Substrat, auf welches die Zusammensetzung appliziert wird. Typische klebrigmachende Harze (Tackifier) wie beispielsweise die Terpenphenolharze oder Harzsäurederivate werden normalerweise in Konzentrationen zwischen 5 und 20 Gew.-% verwendet, typische Haftvermittler wie Polyamine, Polyaminoamide oder Resorcinderivate werden im Bereich zwischen 0,1 und 10 Gew.-% verwendet.

Vorzugsweise sind die erfindungsgemäßen Zusammensetzungen frei von Weichmachern, insbesondere Phthalsäureestern oder Extenderölen. Es kann jedoch notwendig sein, die Rheologie der ungehärteten Zusammensetzung und/oder die mechanischen Eigenschaften und/oder die akustische Dämpfung der gehärteten Zusammensetzungen durch die Zugabe von sog. Extenderölen, das heißt aliphatischen, aromatischen oder naphthenischen Ölen oder Citronensäureestern zu beeinflussen. Vorzugsweise geschieht dies jedoch durch die Zugabe von niedermolekularen Polybutenen, Polyisobutylenen oder durch die Verwendung von niedrigmolekularen Flüssigkautschuken. Falls Extenderöle eingesetzt werden, werden Mengen im Bereich zwischen 5 und 20 Gew.-%, bezogen auf die gesamte heiß-härtende Zubereitung, verwendet.

Wenn die erfindungsgemäßen heiß-härtbaren Zubereitungen als Akustikmaterialien eingesetzt werden sollen, hat es sich als erfindungsgemäß bevorzugt erwiesen, wenn diese vor der Härtung eine Viskosität bei 20°C von 1000 mPa·s bis 100.000 mPa·s gemessen nach DIN 53019 aufweisen. Besondere Vorzugsbereiche für die Viskosität von heiß-härtenden Zubereitungen zum Einsatz im Akustikbereich sind: bei 20°C: 15.000 mPa·s - 80.000 mPa·s und
bei 40°C: 5.000 mPa·s - 20.000 mPa s.

Wenn die erfindungsgemäßen heiß-härtbaren Zubereitungen als Kleb- und Dichtstoffe oder als Unterfütterungsklebstoffe eingesetzt werden sollen, hat es sich als erfindungsgemäß bevorzugt erwiesen, wenn diese vor der Härtung die folgenden Viskositäten gemessen nach DIN 53019 aufweisen:
bei 20°C: 150.000 mPa·s - 400.000 mPa·s und
bei 40°C: 100.000 mPa·s - 200.000 mPa·s.

Die erfindungsgemäßen heiß-härtbarten Zubereitungen können durch Mischung der ausgewählten Komponenten in einem beliebigen, geeigneten Mischer, wie beispielsweise einem Dispersionsmischer, einem Planetenmischen, einem Doppelschneckenmischer, einem kontinuierlichen Mischer oder einem Extruder, insbesondere einem Doppelschneckenextruder hergestellt werden.

Falls die erfindungsgemäßen heiß-härtenden Zubereitungen neben den erfindungswesentlichen Komponenten weiterhin noch mindestens einen Festkautschuk enthalten, ist es vorteilhaft, wenn die Herstellung der Komponenten in einem geeigneten Extruder, beispielsweise einem Doppelschnekenextruder, oder einem geeigneten Kneter unter hoher Scherung erfolgt.

Unabhängig von der Wahl des Werkzeugs kann es gegebenenfalls vorteilhaft sein, eine geringfügige Erhitzung der Zubereitung zuzulassen beziehungsweise die Zubereitung geringfügig zu erwärmen, um die Erreichung einer homogenen, einheitlichen Masse zu erleichtern; es muss aber unbedingt dafür Sorge getragen werden, dass keine Temperaturen erreicht werden, die eine Aktivierung der Vulkanisationsreaktion bewirken.

Ein zweiter Gegenstand der vorliegenden Erfindung ist dementsprechend die Herstellung der erfindungsgemäßen heiß-härtenden Zubereitung durch Mischen der Komponenten unter hoher Scherung.

Die Lagerung der erfindungsgemäßen Zubereitungen bis zur Anwendung erfolgt vorzugsweise in Gebinden von 1000 Liter (Container), 200 Liter (Fässer), 20 bis 50 Liter (Hobbocks), für Großanwendungen im Tankzug oder Tagestank (20.000 Liter) sowie insbesondere für die Handapplikation in Kartuschen von 310 bis 500 ml.

Zum Zeitpunkt der Anwendung wird die erfindungsgemäße heiß-härtbare Zubereitung mit herkömmlichen, gegebenenfalls beheizten Pumpen aus dem Lagerbehältnis zum Ort der Anwendung transportiert und dort appliziert. Die erfindungsgemäßen Zubereitungen zeichnen sich dadurch aus, dass sie durch Spriztechniken appliziert werden können. Insbesondere eine Applikation der Zubereitungen mittels Airless-, Air-assisted, Airmix- Spritzverfahren oder Flat-Stream-Verfahren auf das Substrat ist erfindungsgemäß besonders bevorzugt. Eine Applikation der erfindungsgemäßen Zubereitungen mittels eines Flat-Stream-Verfahrens ist erfindungsgemäß ganz besonders bevorzugt.

Zur Anwendung im bevorzugten Hochdruck-Spritzverfahren können dabei zerstäubende Spritzverfahren oder nicht zerstäubende Spritzverfahren zum Einsatz kommen. Die Materialzerstäubung der Zubereitung zur Applikation ist unter dem reinen Materialdruck mit dem Airless-Verfahren oder durch zusätzliche Luftunterstützung im Air-assisted oder Airmix- Spritzverfahren möglich. Erfindungsgemäß besonders bevorzugt werden für die Applikation der Zubereitung nicht-zerstäubende Applikationsverfahren wie das Flat-Stream-Verfahren oder das Elektro-Swirl-Verfahren eingesetzt. Bei beiden Verfahren kann die Endschichtdicke der Zubereitung in nur einer Applikationsbewegung mit hohen Auftragsgeschwindigkeiten von > 100 mm/sec in Schichtdicken bis zu 5 mm auf das Substrat aufgetragen werden.

Ein Auftrag der erfindungsgemäßen Zubereitungen mit einem der beiden genannten nicht-zerstäubenden Applikationsverfahren Flaststream und Elektro-Swirl zeichnet sich durch einen randscharfen Materialauftrag auf das Substrat ohne Overspray, dass heißt ohne Verunreinigung des Substrates neben der Applikationsstelle durch Spritznebel, durch niedrige Spritzdrücke im Bereich 60 - 120 bar und eine sehr hohe Wiederholgenauigkeit bei mehrfacher Serienapplikation aus.

Die Aushärtung der applizierten heiß-härtenden Zubereitung erfolgt durch Erhitzung, wobei die Zubereitung für eine bestimmte Zeit auf eine Temperatur erhitzt wird, die ausreichend ist, um die Vulkanisationsreaktion zu bewirken. Dabei ist es erfindungsgemäß bevorzugt, wenn die Vulkanisationsreaktion während dieser Erhitzungszeit vollständig abgeschlossen wird; es kann aber auch Verfahren mit kurzen Ofendurchlaufzeiten und Nachvernetzung in Folgeöfen und im Einzelfall sogar Nachvernetzung nach der Zeit im Ofen geben.

In Abhängigkeit von der Zusammensetzung der Zubereitung und den Bedingungen der Fertigungslinie liegen derartige Temperaturen üblicherweise im Bereich von 150°C bis 230°C für Rohbaulinien, vorzugsweise 160°C bis 185°C, mit einer Verweilzeit von 10 bis 90 Minuten, vorzugsweise von 15 bis 30 Minuten. Für die Lacklinie liegen die Temperaturen bei 120°C bis 175°C, vorzugsweise 130°C bis 160°C mit einer Verweilzeit von 5 bis 60 Minuten, bevorzugt von 10 bis 30 Minuten.

Die Art der Wärmequelle spielt prinzipiell keine Rolle, so kann die Wärmezufuhr beispielsweise durch ein Heißluftgebläse, durch Bestrahlung mit Mikrowellen oder Infrarotstrahlung, durch magnetische Induktion oder auch durch Heizzangen erfolgen. Im Bereich des Fahrzeugbaus sowie in Technologiefeldern mit verwandten Herstellprozessen ist es besonders vorteilhaft, wenn die Härtung der erfindungsgemäßen Zubereitungen während der Passage des Fahrzeugs durch den Ofen zur Aushärtung der kathodischen Tauchlackierung oder zum Einbrennen der Lackbeschichtungen erfolgt, so dass auf einen separaten Erhitzungsschritt verzichtet werden kann.

Ein dritter Gegenstand ist die Verwendung der erfindungsgemäßen Zubereitungen als akustisch dämpfender ein- oder zweikomponentiger Klebstoff, Dichtstoff oder Beschichtungsmasse.

Die erfindungsgemäßen Zubereitungen werden häufig zur Unterfütterung von Metallblech-Konstruktionen verwendet, in denen ein verwindungssteifes Stützblech gegen eine dünnwandige Außenhaut geklebt wird. Aufgrund des elastischen Verhaltens unter statischer Last im kalten Zustand weisen die erfindungsgemäßen Zubereitungen den Vorteil einer abzeichnungsfreien Anbindung auf.

Bezüglich der weiteren Details dieses Gegenstandes der vorliegenden Erfindung gilt mutatis mutandis das zu den vorherigen Gegenständen bereits Gesagte.

Ein vierter Gegenstand der vorliegenden Erfindung ist ein Verfahren zum Verbinden von Metallteilen und/oder Abdichten von Fugen zwischen Metallteilen, bei dem
- eine erfindungsgemäße Zubereitung auf zumindest eine Oberfläche mindestens eines der Teile appliziert wird,
- die zu verbindenden Teile zusammengefügt werden,
- und die gefügten Teile, gegebenenfalls unter mechanischer Fixierung, erhitzt werden, um die Zubereitung auszuhärten.

Bezüglich der weiteren Details dieses Gegenstandes der vorliegenden Erfindung gilt mutatis mutandis das zu den vorherigen Gegenständen bereits Gesagte.

Ein fünfter Gegenstand der vorliegenden Erfindung ist ein Verfahren zum Beschichten von Bauteilen durch Aufsprühen einer erfindungsgemäßen Zubereitung auf die Oberfläche des Teils und Erhitzen des beschichteten Teils zum Aushärten der Zubereitung.

Ebenfalls erfindungsgemäß umfasst ist ein Verfahren zur akustischen Dämpfung von Bauteilen, bei dem mindestens eine Oberfläche des Bauteils mit einer erfindungsgemäßen Zubereitung beschichtet wird, und das beschichtete Bauteil zum Aushärten der Zubereitung erhitzt wird.

Es ist erfindungsgemäß bevorzugt, wenn die Beschichtung des Bauteils mittels Aufsprühen der erfindungsgemäßen Zubereitung erfolgt.

Durch den Auftrag der erfindungsgemäßen Zubereitung werden die akustischen Eigenschaften des Bauteils verbessert.

Im Rahmen dieses Gegenstandes der vorliegenden Erfindung hat es sich als besonders vorteilhaft erwiesen, wenn das Aufsprühen der erfindungsgemäßen Zubereitung auf das Substrat mittels eines Airless-, Air-assisted-, Airmix- Spritzverfahren, Flat-Stream-Verfahren oder Swirl-Verfahrens erfolgt.

### Ausführungsbeispiele

Sämtliche Mengenangaben verstehen sich, sofern nichts anderes vermerkt ist, in Gewichtsprozent.

### 1 Akustisch wirksame Klebstoffe

### 1.1 Rezepturen

Es wurden die folgenden Zubereitungen hergestellt:

| Beispiel 1 | |
|---|---|
| Calciumoxid | 2,00 |
| 2,2 Methylen-bis-(4 Methyl-6-tert.-Butylphenol) | 0,50 |
| Calciumcarbonat | 19,29 |
| Calciumcarbonat (gecoatet mit Stearat) | 14,75 |
| Schwefel, pulverförmig | 11,00 |
| Lithene® ALS | 4,00 |
| Polyvest MA 75® | 1,00 |
| Graphit | 15,00 |
| Scotchlite® Glass Bubbles Typ VS 5500 | 7,00 |
| Leinöl | 23,00 |
| Zinkdibenzyldithiocarbamat | 0,80 |
| Zink-2-mercaptobenzothiazol | 0,90 |
| Hydrophile Kieselsäure | 0,70 |
| Expancel® 091 DU 140 | 0,05 |
| Geruchsadditiv | 0,01 |

| Beispiel 2 | |
|---|---|
| Calciumoxid | 2,00 |
| 2,2 Methylen-bis-(4 Methyl-6-tert.-Butylphenol) | 0,50 |
| Calciumcarbonat | 19,49 |
| Calciumcarbonat (gecoatet mit Stearat) | 14,88 |
| Schwefel, pulverförmig | 10,00 |
| Kuraray® LIR 30 | 3,00 |
| Polyvest MA 75® | 1,00 |
| Graphit | 15,0 |
| Scotchlite® Glass Bubbles Typ VS 5500 | 7,00 |
| Leinöl | 24,00 |
| Zinkdibenzyldithiocarbamat | 0,80 |
| Zink-2-mercaptobenzothiazol | 0,90 |
| Hydrophile Kieselsäure | 1,37 |
| Expancel® 091 DU 140 | 0,05 |
| Geruchsadditiv | 0,01 |

| Beispiel 3 | |
|---|---|
| Calciumoxid | 2,00 |
| 2,2 Methylen-bis-(4 Methyl-6-tert.-Butylphenol) | 0,50 |
| Calciumcarbonat | 11,49 |
| Calciumcarbonat, (gecoatet mit Stearat) | 14,75 |
| Schwefel, pulverförmig | 12,00 |
| Polyvest MA 75® mit aktiven Carboxylgruppen, Mn 1700 g/mol | 1,00 |
| Graphit | 15,00 |
| Scotchlite® Glass Bubbles Typ VS 5500 | 7,00 |
| Leinöl | 33,00 |
| Zinkdibenzyldithiocarbamat | 0,80 |
| Zink-2- mercaptobenzothiazol | 0,90 |
| Hydrophile Kieselsäure | 0,70 |
| Expancel® 091 DU 140 | 0,05 |
| Aluminium-Borsilikat-Glas | 0,80 |
| Geruchsadditiv | 0,01 |

| Beispiel 4 | |
|---|---|
| Calciumoxid | 2,00 |
| Tocopherol | 0,50 |
| Calciumcarbonat | 20,79 |
| Calciumcarbonat (gecoatet mit Stearat) | 14,75 |
| Schwefel, pulverförmig | 9,00 |
| Lithene® ALS | 4,00 |
| Polyvest MA 75® | 1,00 |
| Graphit | 15,00 |
| Scotchlite® Glass Bubbles Typ VS 5500 | 7,00 |
| Leinöl | 23,00 |
| Zinkdibenzyldithiocarbamat | 0,80 |
| Zink-2-mercaptobenzothiazol | 0,90 |
| Hydrophile Kieselsäure | 1,20 |
| Expancel® 091 DU 140 | 0,05 |
| Neutralisationsadditiv | 0,01 |

| Beispiel 5 | |
|---|---|
| Calciumoxid | 2,00 |
| Tocopherol | 0,50 |
| Calciumcarbonat | 14,19 |
| Calciumcarbonat (gecoatet mit Stearat) | 14,75 |
| Schwefel, pulverförmig | 10,00 |
| Kuraray® LIR 30 | 5,00 |
| Polyvest MA 75® | 2,00 |
| Graphit | 15,00 |
| Scotchlite® Glass Bubbles Typ VS 5500 | 7,00 |
| Leinöl | 26,30 |
| Zinkdibenzyldithiocarbamat | 0,80 |
| Zink-2-mercaptobenzothiazol | 0,90 |
| Hydrophile Kieselsäure | 1,50 |
| Expancel® 091 DU 140 | 0,05 |
| Neutralisationsadditiv | 0,01 |

| Beispiel 6 (Vergleich) | |
|---|---|
| Calciumoxid | 2,0 |
| 2,2 Methylen-bis-(4 Methyl-6-tert.-Butylphenol) | 0,5 |
| Calciumcarbonat | 12,0 |
| Calciumcarbonat, (gecoatet mit Stearat) | 14,6 |
| Schwefel, pulverförmig | 12,0 |
| Graphit | 15,0 |
| Scotchlite® Glass Bubbles Typ VS 5500 | 6,0 |
| Leinöl | 35,0 |
| Zinkdibenzyldithiocarbamat | 0,8 |
| Zink-2- mercaptobenzothiazol | 0,9 |
| Hydrophile Kieselsäure | 1,14 |
| Expancel® 091 DU 140 | 0,05 |
| Geruchsadditiv | 0,01 |

| Beispiel 7 | |
|---|---|
| Calciumoxid | 2,00 |
| 2,2 Methylen-bis-(4 Methyl-6-tert.-Butylphenol) | 0,50 |
| Calciumcarbonat | 19,29 |
| Calciumcarbonat (gecoatet mit Stearat) | 14,75 |
| Schwefel, pulverförmig | 11,00 |
| Nisso® PB B-2000 | 4,00 |
| Polyvest MA 75® | 1,00 |
| Graphit | 15,00 |
| Scotchlite® Glass Bubbles Typ VS 5500 | 7,00 |
| Leinöl | 23,00 |
| Zinkdibenzyldithiocarbamat | 0,80 |
| Zink-2-mercaptobenzothiazol | 0,90 |
| Hydrophile Kieselsäure | 0,70 |
| Expancel® 091 DU 140 | 0,05 |
| Geruchsadditiv | 0,01 |

| Beispiel 8 | |
|---|---|
| Calciumoxid | 2,00 |
| 2,2 Methylen-bis-(4 Methyl-6-tert.-Butylphenol) | 0,50 |
| Calciumcarbonat | 19,24 |
| Calciumcarbonat (gecoatet mit Stearat) | 14,00 |
| Schwefel, pulverförmig | 11,00 |
| Nisso® PB B-1000 | 5,00 |
| Polyvest MA 75® | 2,00 |
| Graphit | 15,00 |
| Scotchlite® Glass Bubbles Typ VS 5500 | 7,00 |
| Leinöl | 21,00 |
| Zinkdibenzyldithiocarbamat | 0,80 |
| Zink-2-mercaptobenzothiazol | 0,90 |
| Hydrophile Kieselsäure | 1,50 |
| Expancel® 091 DU 140 | 0,05 |
| Geruchsadditiv | 0,01 |

| Beispiel 9 | |
|---|---|
| Calciumoxid | 2,00 |
| 2,2 Methylen-bis-(4 Methyl-6-tert.-Butylphenol) | 0,50 |
| Calciumcarbonat | 17,24 |
| Calciumcarbonat (gecoatet mit Stearat) | 14,00 |
| Schwefel, pulverförmig | 13,00 |
| Polyvest® 110 | 5,00 |
| Polyvest MA 75® | 2,00 |
| Graphit | 15,00 |
| Scotchlite® Glass Bubbles Typ VS 5500 | 7,00 |
| Leinöl | 21,00 |
| Zinkdibenzyldithiocarbamat | 0,80 |
| Zink-2-mercaptobenzothiazol | 0,90 |
| Hydrophile Kieselsäure | 1,50 |
| Expancel® 091 DU 140 | 0,05 |
| Geruchsadditiv | 0,01 |

| Beispiel 10 | |
|---|---|
| Calciumoxid | 2,00 |
| 2,2 Methylen-bis-(4 Methyl-6-tert.-Butylphenol) | 0,50 |
| Calciumcarbonat | 15,24 |
| Calciumcarbonat (gecoatet mit Stearat) | 14,00 |
| Schwefel, pulverförmig | 13,00 |
| Polyvest® 130 | 5,00 |
| Poly BD R 45 HT® | 4,00 |
| Graphit | 15,00 |
| Scotchlite® Glass Bubbles Typ VS 5500 | 7,00 |
| Leinöl | 21,00 |
| Zinkdibenzyldithiocarbamat | 0,80 |
| Zink-2-mercaptobenzothiazol | 0,90 |
| Hydrophile Kieselsäure | 1,50 |
| Expancel® 091 DU 140 | 0,05 |
| Geruchsadditiv | 0,01 |

| Beispiel 11 | |
|---|---|
| Calciumoxid | 2,00 |
| 2,2 Methylen-bis-(4 Methyl-6-tert.-Butylphenol) | 0,50 |
| Calciumcarbonat | 22,69 |
| Calciumcarbonat (gecoatet mit Stearat) | 14,75 |
| Schwefel, pulverförmig | 14,20 |
| Lithene® ALS | 4,00 |
| Polyvest MA 75® | 1,00 |
| Graphit | 15,00 |
| Expancel® 920 DE 80 d30 | 0,40 |
| Leinöl | 23,00 |
| Zinkdibenzyldithiocarbamat | 0,80 |
| Zink-2-mercaptobenzothiazol | 0,90 |
| Hydrophile Kieselsäure | 0,70 |
| Expancel® 091 DU 140 | 0,05 |
| Geruchsadditiv | 0,01 |

| Beispiel 12 | |
|---|---|
| Calciumoxid | 2,00 |
| 2,2 Methylen-bis-(4 Methyl-6-tert.-Butylphenol) | 0,50 |
| Calciumcarbonat | 18,89 |
| Calciumcarbonat (gecoatet mit Stearat) | 14,75 |
| Schwefel, pulverförmig | 14,20 |
| Lithene® ALS | 4,00 |
| Polyvest MA 75® | 1,00 |
| Graphit | 15,00 |
| Scotchlite® Glass Bubbles Typ VS 5500 | 4,00 |
| Expancel® 920 DE 80 d30 | 0,20 |
| Leinöl | 23,00 |
| Zinkdibenzyldithiocarbamat | 0,80 |
| Zink-2-mercaptobenzothiazol | 0,90 |
| Hydrophile Kieselsäure | 0,70 |
| Expancel® 091 DU 140 | 0,05 |
| Geruchsadditiv | 0,01 |

| Beispiel 13 | |
|---|---|
| Calciumoxid | 2,00 |
| 2,2 Methylen-bis-(4 Methyl-6-tert.-Butylphenol) | 0,50 |
| Calciumcarbonat | 19,29 |
| Calciumcarbonat (gecoatet mit Stearat) | 14,75 |
| Schwefel, pulverförmig | 11,00 |
| Lithene® ALS | 4,00 |
| Polyvest MA 75® | 1,00 |
| Graphit | 15,00 |
| Scotchlite® Glass Bubbles Typ VS 5500 | 7,00 |
| Hanföl | 23,00 |
| Zinkdibenzyldithiocarbamat | 0,80 |
| Zink-2-mercaptobenzothiazol | 0,90 |
| Hydrophile Kieselsäure | 0,70 |
| Expancel® 091 DU 140 | 0,05 |
| Geruchsadditiv | 0,01 |

| Beispiel 14 | |
|---|---|
| Calciumoxid | 2,00 |
| 2,2 Methylen-bis-(4 Methyl-6-tert.-Butylphenol) | 0,50 |
| Calciumcarbonat | 19,29 |
| Calciumcarbonat (gecoatet mit Stearat) | 14,75 |
| Schwefel, pulverförmig | 11,00 |
| Lithene® ALS | 4,00 |
| Polyvest MA 75® | 1,00 |
| Graphit | 15,00 |
| Scotchlite® Glass Bubbles Typ VS 5500 | 7,00 |
| Dorschlebertranöl | 23,00 |
| Zinkdibenzyldithiocarbamat | 0,80 |
| Zink-2-mercaptobenzothiazol | 0,90 |
| Hydrophile Kieselsäure | 0,70 |
| Expancel® 091 DU 140 | 0,05 |
| Geruchsadditiv | 0,01 |

### 1.2 Herstellvorschrift

Zur Herstellung der Zubereitungen wurden die Harze jeweils in einem ungeheizten Planetenmischwerk vorgelegt und für mindestens 20min bei einem Vakuum von kleiner 100mbar mit einer Mischgeschwindigkeit von 100U/min homogenisiert. Anschließend wurden schrittweise die Füllstoffe zugegeben und die resultierenden Mischungen jeweils bei max. 50U/min gemischt bis homogene Massen vorlagen. Danach wurden die Mischungen weitere 20min bei einem Vakuum von kleiner 100mbar mit einer Mischgeschwindigkeit von 100U/min homogenisiert. Anschließend wurden die übrigen Rohstoffe zu den Formulierungen gegeben und bei max. 50U/min gemischt bis homogene Massen vorlagen. Zuletzt wurden die Mischungen für weitere 10min bei einem Vakuum von kleiner 100mbar mit einer Mischgeschwindigkeit von 100U/min homogenisiert und in Kartuschen abgefüllt. Während der gesamten Misch- und Homogenisierungsprozesse wurde dabei darauf geachtet, dass die Zubereitung durch auftretende Mischungswärme nicht wärmer als 60°C wurde.

### 1.3 Verzeichnis der eingesetzten Handelsprodukte:

| | |
|---|---|
| Expancel® 091 DU 140 | expandierbare Mikrohohlkugeln aus Acrylnitril-, Methacrylnitril-, Methylmethacrylat-Copolymer, Teilchengröße ca. 35-45µm; Fa. Akzo Nobel; |
| Expancel® 920 DE 80 d30 | expandierte Mikrohohlkugeln aus Acrylnitril-, Methacrylnitril-, Methylmethacrylat-Copolymer, enthaltend Isopentan; Fa. Akzo Nobel; |
| Kuraray® LIR 30 | Flüssiges Polyisopren, Mn ca. 29000 g/mol, Firma Nippon Soda; |
| Lithene® ALS | Flüssiges Polybutadien, Mn ca. 1000 g/mol ca. 10 - 20Gew.-% cis-1,4-Anteil, Firma Synthomer; |
| Nisso® PB B-1000 | Flüssiges 1,2-Polybutadien, Mn ca. 1000g/mol, ca. 85Gew.-%% 1,2-Vinyl-Anteil, Firma Nippon Soda; |
| Nisso® PB B-2000 | Flüssiges 1,2-Polybutadien, Mn ca. 2000g/mol, ca. 90Gew.-%% 1,2-Vinyl-Anteil, Firma Nippon Soda; |
| Poly BD R 45 HAT® | Hydroxylterminiertes 1,3-Polybutadien; Mn ca. 2800g/mol, Firma Sartomer/Cray Valley; |
| Polyvest® 110 | Oligomeres, flüssiges 1,3-Polybutadien; Mn ca. 2600g/mol; ca. 75Gew.-% cis-1,4-Anteil, Firma Evonik; |
| Polyvest® 130 | Oligomeres, flüssiges 1,3-Polybutadien; Mn ca. 4600g/mol; ca. 75Gew.-%% cis-1,4-Anteil, Firma Evonik; |
| Polyvest® MA 75 | Polybutadien mit aktiven Carboxylgruppen, Mn 1700 g/mol: Firma Evonik, |
| Scotchlite® Glass Bubbles Typ VS 5500 | Glashohlkugeln aus Natronkalk-Borosilikat-Glas, Firma 3M; |

### 1.4 Messergebnisse:

### 1.4.1 Bestimmung der Shore A Härte

Zur Bestimmung der Shore A Härte wurden die Beispielsrezepturen jeweils 20 Minuten bei 160°C ausgehärtet. Dann wurden Proben mit einer Materialstärke von 5mm entnommen und bei Raumtemperatur die Shore A Härte bestimmt. Die Messwerte sind in Tabelle 1 zusammengestellt.

### 1.4.2 Bestimmung der Zugscherfestigkeit

Die erfindungsgemäßen Zubereitungen wurden auf Stahlbleche (Substrat KTL-Beschichtung; Dicke des Prüfkörpers: 0,8mm; Breite 25mm) aufgetragen. Die mit den erfindungsgemäßen Zubereitungen behandelten KTL-Bleche wurden so miteinander in Kontakt gebracht, dass sich ein Überlappungsbereich von 20mm ergab. Die Prüfkörper wurden auf Klebspaltdicke verpresst, (wobei als Abstandshalter Stahlkugeln mit einem Durchmesser von 2000µm genutzt wurden) mit Klammern fixiert und anschließend 20min bei 160°C ausgehärtet. Die Messung erfolgte am Folgetag bei 25°C und einer Zugschergeschwindigkeit von 25mm/min. In allen Fällen wurde für die erfindungsgemäßen Zubereitungen ein zu mehr als 75% kohäsives Bruchverhalten beobachtet. Die Messwerte sind in Tabelle 1 zusammengestellt.

### 1.4.3 Bestimmung des Verlustfaktors und des Verlustmaximums

1 mm dicke Federstahlstreifen der Abmessungen 240 mm x 10 mm wurden auf einem 200 mm langen Abschnitt mit einer Schicht der Produkte aus den Beispielen 1 - 14 beschichtet, anschließend wurden die Beschichtungen für 20 Minuten bei 160°C Objekttemperatur ausgehärtet. Die Bestimmung des Dämpfungswertes erfolgte nach Auskühlung mittels des Biegeschwingungsversuchs der DIN 53440, Teil 3 bei 200 Hz im Temperaturbereich von -25°C bis +80°C. Angegeben ist jeweils die Breite des Temperaturbereichs, innerhalb dessen der Verlustfaktor einen Wert größer als 0,1 aufweist. Das Verlustmaximum gibt an, bei welcher Temperatur der Verlustfaktor den maximalen Wert annimmt. Die Messwerte sind in Tabelle 1 zusammengestellt.

**Tabelle 1:**

| | Shore Härte [Skalenteile] | Zugscherfestigkeit [MPa] | Verlustfaktor [K] | Verlustmaximum [°C] |
|---|---|---|---|---|
| Beispiel 1 | 70,2 | 0,87 | 30,1 | 20 |
| Beispiel 2 | 82,3 | 1,17 | 26,5 | 10 |
| Beispiel 3 | 71,4 | 1,02 | 27,4 | 0 |
| Beispiel 4 | 72,5 | 0,91 | 29,3 | 20 |
| Beispiel 5 | 83,7 | 1,12 | 26,9 | 10 |
| Beispiel 6 (Vergleich) | 70,5 | 0,89 | 26,5 | -10 |
| Beispiel 7 | 92,6 | 2,19 | 31,3 | 20 |
| Beispiel 8 | 82,8 | 1,18 | 30,4 | 20 |
| Beispiel 9 | 77,5 | 0,94 | 28,0 | 10 |
| Beispiel 10 | 75,8 | 0,88 | 29,1 | 10 |
| Beispiel 11 | 72,3 | 0,81 | 31,2 | 20 |
| Beispiel 12 | 73,1 | 0,79 | 29,8 | 20 |
| Beispiel 13 | 89,2 | 2,11 | 32,2 | 10 |
| Beispiel 14 | 91,2 | 2,05 | 31,7 | 10 |

### 2 Unterfütterungsklebstoffe

### 2.1 Rezepturen

Es wurden die folgenden Zubereitungen hergestellt:

| Beispiel U1 | |
|---|---|
| Polybutadienfestkautschuk mit mind. 96Gew.-% 1,4-cis-Anteil; Mn ca. 500.000 bis 1.000.000 g/mol | 6,00 |
| Ruß | 0,50 |
| Calciumoxid, gemahlen | 3,00 |
| Zinkoxid | 2,00 |
| Calciumcarbonat | 30,65 |
| Magnesiumhydrosilikat | 10,00 |
| p-Benzochinondioxim | 1,00 |
| Calciumcarbonat, oberflächenbehandelt mit Fettsäuren | 13,20 |
| 2,2-Dithiobis(benzothiazol) | 4,00 |
| Polyvest® MA 75 | 7,00 |
| Leinöl | 15,00 |
| Zink-2- mercaptobenzothiazol | 1,00 |
| Rapsöl | 4,00 |
| Schwefel, pulverförmig | 2,50 |
| Expancel® 091 DU 140 | 0,15 |

| Beispiel U2 | |
|---|---|
| Polybutadienfestkautschuk mit mind. 96Gew.-% 1,4-cis-Anteil; Mn ca. 500.000 bis 1.000.000 g/mol | 4,50 |
| Ruß | 0,50 |
| Calciumoxid, gemahlen | 2,50 |
| Zinkoxid | 4,00 |
| Calciumcarbonat | 8,895 |
| 2,2 Methylen-bis-(4 Methyl-6-tert.-Butylphenol) | 0,50 |
| Calciumcarbonat (gefällt); oberflächenbehandelt mit Fettsäuren | 31,00 |
| 2,2-Dithiobis(benzothiazol) | 1,00 |
| Benzolsulfinsäure-Zinksalz | 0,005 |
| Azodicarbonsäureamid | 0,05 |
| Paraffinisches Mineralöl | 9,00 |
| Rapsöl | 15,00 |
| Leinöl | 10,00 |
| Polyvest® MA 75 | 4,90 |
| 1,2-Polybutadien, Maleinsäureanhydrid-Addukt; Mn 1600 g/mol | 1,95 |
| Expancel® 091 DU 140 | 0,20 |
| Schwefel, pulverförmig | 6,00 |

Die Zubereitung wurde entsprechend der Herstellvorschrift unter Ziffer 1.2 hergestellt; die eingesetzten Handelsprodukte haben die unter Ziffer 1.3 angegebenen Bedeutungen.

### 2.2 Messergebnisse:

### 2.2.1 Bestimmung der Shore A Härte

Zur Bestimmung der Shore A Härte wurden die Beispielsrezepturen U1 und U2 20 Minuten bei 160°C ausgehärtet. Dann wurden Proben mit einer Materialstärke von 5mm entnommen und bei Raumtemperatur die Shore A Härte bestimmt. Die Messwerte sind in Tabelle 2 zusammengestellt.

### 2.2.2 Bestimmung der Zugscherfestigkeit

Die erfindungsgemäßen Zubereitungen wurden auf mit Korrosionsschutzöl (Anticorit® RP 4107S; Firma Fuchs) behandelte Stahlbleche (Qualität 14 O 5; Dicke des Prüfkörpers: 0,8mm; Breite 25mm) aufgetragen. Die mit den erfindungsgemäßen Zubereitungen behandelten Bleche wurden so miteinander in Kontakt gebracht, dass sich ein Überlappungsbereich von 20mm ergab. Die Prüfkörper wurden auf Klebspaltdicke verpresst, (wobei als Abstandshalter Stahlkugeln mit einem Durchmesser von 2000µm genutzt wurden) mit Klammern fixiert und anschließend 20min bei 160°C ausgehärtet. Die Messung erfolgte am Folgetag bei 25°C und einer Zugschergeschwindigkeit von 25mm/min. In allen Fällen wurde für die erfindungsgemäßen Zubereitungen ein zu mehr als 75% kohäsives Bruchverhalten beobachtet. Die Messwerte sind in Tabelle 2 zusammengestellt.

**Tabelle 2:**

| | Shore A Härte [Skalenteile] | Zugfestigkeit [MPa] |
|---|---|---|
| Beispiel U1 | 64,0 | 1,79 |
| Beispiel U2 | 45,3 | 1,23 |

## Patentansprüche

1. Heiß-härtende Zubereitung, enthaltend
(a) eine Triglyceridfraktion, deren Fettsäurenverteilung einen Anteil von mindestens 5Gew.-%, insbesondere von mindestens 60Gew.-%, einer oder mehrerer Ω-3-Fettsäure(n) und/oder einer oder mehrerer Ω-6-Fettsäure(n) aufweist,
(b) mindestens ein Vulkanisationsmittel ausgewählt aus der Gruppe, bestehend aus
(b1) Schwefel,
(b2) peroxidischen Vulkanisationsmitteln,
(b3) Chinonen und/oder Chinondioximen und/oder
(b4) Dinitrosobenzolen,
(c) mindestens einen anorganischen Füllstoff und
(d) mindestens ein synthetisches Polymer, das mindestens eine C=C-Doppelbindung und/oder mindestens eine CΞC-Dreifachbindung aufweist,
wobei die Triglyceridfraktion eine Fettsäurenverteilung mit einem Anteil von mindestens 15Gew.-% einer oder mehrerer Ω-3-Fettsäure(n) aufweist und die Triglyceridfraktion (a) in der heiß-härtbaren Zubereitung in einer Menge von 10 bis 50 Gew.-% bezogen auf die gesamte Zubereitung enthalten ist.

2. Zubereitung nach Anspruch 1, **dadurch gekennzeichnet, dass** die Triglyceridfraktion (a) in der heiß-härtbaren Zubereitung in einer Menge von 10 bis 40 Gew.-% bezogen auf die gesamte Zubereitung enthalten ist.

3. Zubereitung nach einem der Ansprüche 1 oder 2, **dadurch gekennzeichnet, dass** als Ω-3-Fettsäure α-Linolensäure enthalten ist.

4. Zubereitung nach einem der Ansprüche 1 bis 3, **dadurch gekennzeichnet, dass** die Triglyceridfraktion Leinöl enthält.

5. Zubereitung nach einem der Ansprüche 1 bis 4, **dadurch gekennzeichnet, dass** sie als anorganischen Füllstoff Calciumcarbonat enthält.

6. Zubereitung nach einem der Ansprüche 1 bis 5, **dadurch gekennzeichnet, dass** zusätzlich zu dem Vulkanisationsmittel mindestens einen organischen Härtungsbeschleuniger und/oder mindestens ein Metalloxid enthält.

7. Zubereitung nach einem der Ansprüche 1 bis 6, **dadurch gekennzeichnet, dass** sie als anorganischen Füllstoff mindestens ein Rheologieadditiv, vorzugsweise ausgewählt aus Siliziumdioxid und/oder Ruß, enthält.

8. Zubereitung nach einem der Ansprüche 1 bis 7, **dadurch gekennzeichnet, dass** sie weiterhin mindestens ein Antioxidans, insbesondere ein natürliches Antioxidans, enthält.

9. Verwendung der Zubereitung nach einem der Ansprüche 1 bis 8 als akustisch dämpfender ein- oder zweikomponentiger Klebstoff, Dichtstoff oder Beschichtungsmasse.

10. Verfahren zum Verbinden von Metallteilen und/oder Abdichten von Fugen zwischen Metallteilen, **dadurch gekennzeichnet, dass**
- eine Zubereitung nach einem der Ansprüche 1 bis 8 auf zumindest eine Oberfläche mindestens eines der Teile appliziert wird,
- die zu verbindenden Teile zusammengefügt werden,
- und die gefügten Teile, gegebenenfalls unter mechanischer Fixierung, erhitzt werden, um die Zubereitung auszuhärten.

11. Verfahren zum Beschichten von Bauteilen durch Aufsprühen einer Zubereitung gemäß einem der Ansprüche 1 bis 8 auf die Oberfläche des Teils und Erhitzen des beschichteten Teils zum Aushärten der Zubereitung.

12. Verfahren zum Beschichten von Bauteilen nach Anspruch 11, **dadurch gekennzeichnet, dass** die Zubereitung in Airless-, Air-assisted-, Airmix- Spritzverfahren, Flat-Stream-Verfahren oder Swirl-Verfahren auf das Substrat aufgespritzt wird.

## Claims

1. A heat-curing preparation, containing
(a) a triglyceride fraction of which the fatty acid distribution has a proportion of at least 5 wt.%, in particular of at least 60 wt.%, of one or more Ω-3 fatty acid/s and/or one or more Ω-6 fatty acid/s,
(b) at least one vulcanizing agent selected from the group consisting of
(b1) sulfur,
(b2) peroxidic vulcanizing agents,
(b3) quinones and/or quinone dioximes and/or
(b4) dinitrosobenzenes,
(c) at least one inorganic filler and
(d) at least one synthetic polymer that contains at least one C=C double bond and/or at least one CΞC triple bond,
wherein the triglyceride fraction has a fatty acid distribution that has a proportion of at least 15 wt.% of one or more Ω-3 fatty acid/s and the triglyceride fraction (a) is contained in the heat-curable preparation in an amount of from 10 to 50 wt.% based on the total preparation.

2. The preparation according to claim 1, **characterized in that** the triglyceride fraction (a) is contained in the heat-curable preparation in an amount of from 10 to 40 wt.% based on the total preparation.

3. The preparation according to one of claims 1 or 2, **characterized in that** α-linolenic acid is contained as a Ω-3 fatty acid.

4. The preparation according to one of claims 1 to 3, **characterized in that** the triglyceride fraction contains linseed oil.

5. The preparation according to one of claims 1 to 4, **characterized in that** it contains calcium carbonate as an inorganic filler.

6. The preparation according to one of claims 1 to 5, **characterized in that**, in addition to the vulcanizing agent, it contains at least one organic curing accelerator and/or at least one metal oxide.

7. The preparation according to one of claims 1 to 6, **characterized in that** it contains at least one rheology additive as an inorganic filler, preferably selected from silicon dioxide and/or carbon black.

8. The preparation according to one of claims 1 to 7, **characterized in that** it also contains at least one antioxidant, in particular a natural antioxidant.

9. The use of the preparation according to one of claims 1 to 8 as an acoustically damping one- or two-component adhesive, sealant or coating mass.

10. A method for connecting metal parts and/or sealing joints between metal parts, **characterized in that**
- a preparation according to one of claims 1 to 8 is applied to at least one surface of at least one of the parts,
- the parts to be connected are joined together,
- and the joined parts are heated, optionally while mechanically attached, in order to cure the preparation.

11. A method for coating components by spraying a preparation according to one of claims 1 to 8 onto the surface of the part and heating the coated part in order to cure the preparation.

12. The method for coating components according to claim 11, **characterized in that** the preparation is sprayed onto the substrate in an airless, air-assisted or Airmix spraying method, a flat stream method or a swirl method.

## Revendications

1. Préparation thermodurcissable contenant
(a) une fraction de triglycérides dont la distribution d'acides gras a une proportion d'au moins 5 % en poids, en particulier d'au moins 60 % en poids, d'un ou de plusieurs acides gras Ω-3 et/ou d'un ou de plusieurs acides gras Ω-6,
(b) au moins un agent de vulcanisation choisi dans le groupe constitué
(b1) du soufre,
(b2) d'agents de vulcanisation peroxydiques,
(b3) de quinones et/ou de dioximes de quinones et/ou
(b4) de dinitrosobenzènes,
(c) au moins une charge minérale et
(d) au moins un polymère synthétique ayant au moins une double liaison C=C et/ou au moins une triple liaison C=C,
la fraction de triglycérides présentant une distribution d'acides gras ayant une proportion d'au moins 15 % en poids d'un ou de plusieurs acides gras Ω-3 et la fraction de triglycérides (a) étant contenue dans la préparation thermodurcissable dans une quantité de 10 à 50 % en poids sur la base de toute la préparation.

2. Préparation selon la revendication 1, **caractérisée en ce que** la fraction de triglycérides (a) est contenue dans la préparation thermodurcissable dans une quantité de 10 à 40 % en poids sur la base de toute la préparation.

3. Préparation selon l'une des revendications 1 ou 2, **caractérisée en ce qu'**elle contient comme acide gras Ω-3 de l'acide α-linolénique.

4. Préparation selon l'une des revendications 1 à 3, **caractérisée en ce que** la fraction de triglycérides contient de l'huile de lin.

5. Préparation selon l'une des revendications 1 à 4, **caractérisée en ce qu'**elle contient comme charge minérale du carbonate de calcium.

6. Préparation selon l'une des revendications 1 à 5, **caractérisée en ce qu'**elle contient, en plus de l'agent de vulcanisation, au moins un accélérateur de durcissement organique et/ou au moins un oxyde métallique.

7. Préparation selon l'une des revendications 1 à 6, **caractérisée en ce qu'**elle contient comme charge minérale au moins un additif de rhéologie, choisi de préférence parmi le dioxyde de silicium et/ou le noir de carbone.

8. Préparation selon l'une des revendications 1 à 7, **caractérisée en ce qu'**elle contient en outre au moins un antioxydant, en particulier un antioxydant naturel.

9. Utilisation de la préparation selon l'une des revendications 1 à 8 comme adhésif, matière d'étanchéité ou masse de revêtement à un ou deux composants présentant des propriétés d'amortissement acoustique.

10. Procédé de liaison de pièces métalliques et/ou d'étanchement de joints entre des pièces métalliques, **caractérisé en ce que**
- une préparation selon l'une des revendications 1 à 8 est appliquée sur au moins une surface d'au moins une des pièces,
- les pièces à lier sont assemblées,
- et les pièces assemblées, éventuellement avec fixation mécanique, sont chauffées pour durcir la préparation.

11. Procédé de revêtement de pièce de construction par pulvérisation d'une composition selon l'une des revendications 1 à 8 sur la surface de la pièce et par chauffage de la pièce revêtue pour durcir la préparation.

12. Procédé de revêtement de pièces de construction selon la revendication 11, **caractérisé en ce que** la préparation est pulvérisée sur le substrat par un procédé de pulvérisation Airless, Air-assisted, Airmix ou dans un procédé Flat-Stream ou un procédé Swirl.
